# EUROPÄISCHE PATENTSCHRIFT

(11) **EP 3 814 134 B1**
(45) Veröffentlichungstag und Bekanntmachung des Hinweises auf die Patenterteilung: **09.04.2025**
(21) Anmeldenummer: 19728076.1
(22) Anmeldetag: 06.06.2019
(51) Int. Cl.: B32B 17/10, B32B 3/26, B32B 27/36

(54) **MEHRSCHICHTFOLIE MIT ELEKTRISCH SCHALTBAREN OPTISCHEN EIGENSCHAFTEN UND VERBESSERTER ELEKTRISCHER KONTAKTIERUNG**
MULTILAYER FILM WITH ELECTRICALLY SWITCHABLE OPTICAL PROPERTIES AND IMPROVED ELECTRICAL CONTACT
FEUILLE MULTICOUCHE DOTÉE DE PROPRIÉTÉS OPTIQUES COMMUTABLES ÉLECTRIQUEMENT ET CONTACT ÉLECTRIQUE AMÉLIORÉ

(30) Priorität: 28.06.2018 EP 18180268
(43) Veröffentlichungstag der Anmeldung: 05.05.2021
(73) Patentinhaber: Saint-Gobain Glass France, 92400 Courbevoie (FR)
(72) Erfinder: KLEIN, Marcel, 52499 Baesweiler (DE); SCHURSE, Sebastian, 52531 Übach-Palenberg (DE); SCHULZ, Valentin, 52382 Niederzier (DE)
(74) Vertreter: Gebauer, Dieter Edmund
(86) Internationale Anmeldenummer: PCT/EP2019/064744
(87) Internationale Veröffentlichungsnummer: WO 2020/001949

(56) Entgegenhaltungen:
- WO-A1-2014/072137
- US-A- 5 888 627
- US-A1- 2003 019 859
- US-A1- 2018 031 933

## Beschreibung

Die Erfindung betrifft eine Mehrschichtfolie mit elektrisch schaltbaren optischen Eigenschaften, eine Verbundscheibe umfassend eine solche Mehrschichtfolie und ein Verfahren zu deren Herstellung und deren Verwendung.

Es sind Verglasungen mit elektrisch schaltbaren optischen Eigenschaften bekannt. Solche Verglasungen enthalten ein Funktionselement, welches typischerweise eine aktive Schicht zwischen zwei Flächenelektroden enthält. Die optischen Eigenschaften der aktiven Schicht können durch eine an die Flächenelektroden angelegte Spannung verändert werden. Zu den insbesondere im Automobilbereich verwendeten elektrisch schaltbaren Funktionselementen zählen PDLC-Elemente (*polymer dispersed liquid crystal*), deren aktive Schicht in einer Polymermatrix eingelagerte Flüssigkristalle umfasst. PDLC-Funktionselemente sind beispielsweise aus DE 102008026339 A1 bekannt. Ein weiteres Beispiel sind SPD-Funktionselemente (*suspended particle device*), die beispielsweise aus EP 0876608 B1 und WO 2011033313 A1 bekannt sind. Durch die angelegte Spannung lässt sich die Transmission von sichtbarem Licht durch PDLC- oder SPD-Funktionselemente steuern. Verglasungen mit solchen Funktionselementen können also auf komfortable Weise elektrisch abgedunkelt werden.

Elektrisch schaltbare Funktionselemente werden häufig als Mehrschichtfolien bereitgestellt. Dabei ist das eigentliche Funktionselement zwischen zwei polymeren Trägerfolien angeordnet. Solche Mehrschichtfolien ermöglichen eine vereinfachte Herstellung einer elektrisch schaltbaren Verglasung. Typischerweise wird die Mehrschichtfolie zwischen zwei Glasscheiben mit herkömmlichen Methoden einlaminiert, wobei eine Verbundscheibe mit elektrisch schaltbaren optischen Eigenschaften erzeugt wird. Insbesondere können die Mehrschichtfolien kommerziell erworben werden, so dass der Hersteller der Verglasung das schaltbare Funktionselement an sich nicht eigens herstellen muss.

Das Funktionselement muss zur Verwirklichung des Schaltvorgangs elektrisch leitend kontaktiert werden, indem eine externe Spannungsquelle mit den Flächenelektroden des Funktionselementes verbunden wird. Zur gezielten Kontaktierung einer Flächenelektrode ist diese zunächst aus der Mehrschichtfolie freizulegen. Dabei wird in einem ersten Schritt eine Trägerfolie der Mehrschichtfolie inklusive der auf der Trägerfolie befindlichen Flächenelektrode zurückgeschnitten. Die dadurch freigelegte aktive Schicht wird entfernt, beispielsweise durch mechanisches Abreiben unter Verwendung eines Lösungsmittels. Nach Entfernen der aktiven Schicht tritt die daran angrenzende Flächenelektrode zu tage und kann elektrisch leitend kontaktiert werden. Dieser Vorgang beinhaltet eine Vielzahl von manuell durchzuführenden Arbeitsschritten, die nicht oder nur mit unzureichendem Ergebnis automatisierbar sind. Insbesondere der Reinigungsschritt zur Entfernung der aktiven Schicht ist dabei als kritisch anzusehen. Einerseits ist die aktive Schicht vollständig zu entfernen um eine gute Kontaktierung zu ermöglichen. Andererseits ist die mechanische Beanspruchung der Flächenelektrode zu minimieren um eine mögliche Beschädigung zu vermeiden. Eine solche Beschädigung kann bereits von den Partikeln der aktiven Schicht selbst ausgelöst werden. Bereits die in einer PDLC-Schicht enthaltenen Kristalle genügen beispielsweise um die Flächenelektrode beim Abreiben der PDLC-Schicht zu verkratzen. Diese Kratzer münden in einer lokal erhöhten Leistungsaufnahme, einer dadurch bedingten Erwärmung und letztlich in einem Versagen des Bauteils.

Mehrschichtfolien umfassend eine aktive Schicht, die über zwei dazu benachbarte Flächenelektroden auf jeweils einer Trägerfolie angesteuert wird, sind bekannt. Eine Strukturierung solcher Mehrschichtfolien ist durch Einbringen entschichteter Trennlinien in die Flächenelektroden möglich, wobei im Bereich der Trennlinien die elektrisch leitfähige Schicht, die als Flächenelektrode dient entfernt oder zersetzt ist. Gemäß WO 2014/072137 ist dies besonders vorteilhaft mittels eines Lasers möglich, der durch eine der Trägerfolien hindurch auf die entsprechende Flächenelektrode fokussiert wird.

US 2018/0031933 A1 offenbart optische Displays umfassend Flüssigkristallschichten. Im Randbereich des Displays in einem Bereich außerhalb der Flüssigkristallschicht ist ein mit einem leitfähigen Material gefülltes Kontaktloch angebracht.

In US 2003/0019859 A1 wird ein beheizbares Fahrzeugfenster offenbart, das mit einer elektrisch leitfähigen Beschichtung ausgestattet ist. Die elektrisch leitfähige Beschichtung wird über Sammelleiter (auch als bus bars bezeichnet) kontaktiert, wobei der Effekt beschrieben wird, dass bei Erwärmen der Sammelleiter ein Teil des leitfähigen Materials der Sammelleiter in die Schichten der elektrisch leitfähigen Beschichtung vordringt.

US 5888627 beschreibt gedruckte Leiterplatten, die über Kontaktlöcher im Plattensubstrat verfügen, wobei die Kontaktlöcher mit einer elektrisch leitfähigen Harzkomponente gefüllt sind.

Aufgabe der vorliegenden Erfindung ist es, eine Mehrschichtfolie mit elektrisch schaltbaren optischen Eigenschaften, die eine verbesserte elektrische Kontaktierung aufweist, eine Verbundscheibe umfassend solch eine Mehrschichtfolie, sowie ein wirtschaftliches Verfahren zur deren Herstellung bereitzustellen. Das Verfahren soll eine automatisierte elektrische Kontaktierung der Mehrschichtfolie ermöglichen, wobei die Nachteile nach dem Stand der Technik vermieden werden.

Die Aufgabe der vorliegenden Erfindung wird erfindungsgemäß durch eine Mehrschichtfolie mit elektrisch schaltbaren optischen Eigenschaften, eine Verbundscheibe umfassend solch eine Mehrschichtfolie, ein Verfahren zu deren Herstellung und deren Verwendung nach den unabhängigen Ansprüchen 1, 12, 13 und 15 gelöst. Bevorzugte Ausführungen der Erfindung gehen aus den Unteransprüchen hervor.

Die erfindungsgemäße Mehrschichtfolie mit elektrisch schaltbaren optischen Eigenschaften, umfasst mindestens eine erste Trägerfolie mit einer ersten elektrisch leitfähigen Schicht, eine aktive Schicht, eine zweite elektrisch leitfähige Schicht und eine zweite Trägerfolie. Die erste elektrisch leitfähige Schicht ist dabei auf der ersten Trägerfolie angeordnet, während sich die zweite elektrisch leitfähige Schicht auf einer Oberfläche der zweiten Trägerfolie befindet. Die erste und die zweite elektrisch leitfähige Schicht sind im Schichtstapel benachbart zur aktiven Schicht der Mehrschichtfolie angeordnet und dienen dieser als Flächenelektroden. Die erfindungsgemäße Mehrschichtfolie weist mindestens eine erste Aussparung auf, die in Form eines Durchgangslochs durch sämtliche Schichten der Mehrschichtfolie hindurch ragt. Die erste Aussparung ist mit einer elektrisch leitfähigen Füllmasse gefüllt. Die elektrisch leitfähige Füllmasse kontaktiert die erste elektrisch leitfähige Schicht innerhalb der ersten Aussparung elektrisch leitend. An der Mantelfläche der Aussparung steht die elektrisch leitfähige Füllmasse in unmittelbarem Kontakt zum Schichtquerschnitt und somit auch mindestens zur ersten elektrisch leitfähigen Schicht, wodurch eine entsprechende elektrische Kontaktierung zustande kommt. Ein erster Sammelleiter ist an einer der äußeren Oberflächen der ersten oder zweiten Trägerfolie im Bereich der ersten Aussparung angebracht und kontaktiert die elektrisch leitende Füllmasse elektrisch leitend. Demnach kann über den ersten Sammelleiter eine elektrische Spannung an der ersten elektrisch leitfähigen Schicht angelegt werden. Der erfindungsgemäße Aufbau der Mehrschichtfolie ermöglicht eine verbesserte elektrische Kontaktierung, da die elektrisch leitfähige Schicht nicht bei einem nach dem Stand der Technik erforderlichen manuellen Abtragen der aktiven Schicht beschädigt werden kann. Darüber hinaus ist mittels des erfindungsgemäßen Aufbaus ein hohes Maß an Automatisierung im Produktionsprozess möglich.

Die Aussparung entspricht in ihrer Form einem allgemeinen Zylinder umfassend zwei gegenüberliegende Grundflächen und eine Mantelfläche. Die Grundflächen können kreisförmig, elliptisch oder in Form eines Polygons ausgeführt sein. Bevorzugt sind die Grundflächen kreisförmig, elliptisch oder viereckig ausgestaltet, wobei auch im Wesentlichen eckige Grundkörper abgerundete Ecken aufweisen können. Abgerundete oder runde Formen sind besonders vorteilhaft. Der Schichtstapel der Mehrschichtfolie verfügt in der Regel über eine hohe Steifigkeit. Abgerundete Ecken oder runde Aussparungen ermöglichen ein einfacheres Entfernen der herausgetrennten Anteile aus der Aussparung, wobei durch diese Formgebung ein erhöhter Druck im Eckbereich und daraus resultierende Beschädigungen vermieden werden. Ferner sind runde oder abgerundete Geometrien vorteilhaft um ein lückenloses Verfüllen der Aussparung mit der elektrisch leitfähigen Füllmasse sicherzustellen. Unter diesem Aspekt haben sich Aussparungen mit kreisförmigen oder elliptischen Grundflächen als besonders geeignet erwiesen. Ebenfalls im Zuge einer vereinfachten Herstellbarkeit werden die beiden Grundflächen der Aussparung bevorzugt deckungsgleich gewählt. Die Aussparung ist innerhalb der Fläche der Mehrschichtfolie in diese eingebracht. Die Aussparung grenzt somit nicht an die umlaufende Kante der Mehrschichtfolie und ist entlang ihrer Wandung (Mantelfläche) von der Mehrschichtfolie umgeben. Die Aussparung stellt somit einen Hohlraum dar, der an mindestens einer der Grundflächen zu der, der elektrisch leitfähigen Schicht abgewandten, Oberfläche einer der Trägerfolien geöffnet ist. Diese geometrische Beschreibung der mindestens einen ersten Aussparung gilt nicht nur für diese, sondern auch auf weitere erste Aussparungen sowie zweite oder weitere Aussparungen.

Eine elektrische Kontaktierung der zweiten elektrisch leitfähigen Schicht erfolgt analog zur Kontaktierung der ersten elektrisch leitfähigen Schicht.

Somit erfolgt die elektrische Kontaktierung der zweiten Flächenelektrode der Mehrschichtfolie analog zur Kontaktierung der ersten Flächenelektrode. Dazu weist die
Mehrschichtfolie innerhalb ihrer Fläche mindestens eine zweite Aussparung in Form eines durch alle Schichten der Mehrschichtfolie durchgreifenden Kontaktlochs auf, wobei die zweite Aussparung ebenfalls mit einer elektrisch leitfähigen Füllmasse verfüllt ist. Die elektrisch leitfähige Füllmasse kontaktiert die zweite elektrisch leitfähige Schicht innerhalb der zweiten Aussparung elektrisch leitend. Dabei ist ein zweiter Sammelleiter an der äußeren Oberfläche der ersten oder zweiten Trägerfolie elektrisch leitend mit der elektrisch leitenden Füllmasse der zweiten Aussparung kontaktiert. Somit können beide Flächenelektroden (elektrisch leitfähige Schichten) der Mehrschichtfolie auf einfache Art und Weise kontaktiert werden.

Die ersten und die zweiten Aussparungen liegen in Form von Durchgangslöchern vor. Alternativ wären teilweise Aussparungen möglich, diese sind jedoch wesentlich aufwändiger realisierbar. Die mindestens eine erste Aussparung und die mindestens eine zweite Aussparung sind aus diesem Grund als Durchgangslöcher ausgeführt, die durch sämtliche Schichten der Mehrschichtfolie hindurch ragen. Diese erstrecken sich somit durchgehend zwischen der zur Umgebung gerichteten äußeren Oberfläche der ersten Trägerfolie und der zur Umgebung gerichteten äußeren Oberfläche der zweiten Trägerfolie. Dies ist besonders vorteilhaft, da ein Durchgangsloch mit einfachen technischen Mitteln realisierbar ist und der zu entfernende Anteil der Mehrschichtfolie mit geringem Kraftaufwand entfernt werden kann. Bei einer nicht durchgehenden Aussparung haftet der zu entfernende Anteil der Mehrschichtfolie hingegen an der innenliegenden Grundfläche der Aussparung an den verbleibenden Folienkomponenten.

Die elektrisch leitende Anbindung zwischen einem Sammelleiter und der von diesem Sammelleiter zu kontaktierenden elektrisch leitfähigen Schicht erfolgt erfindungsgemäß ausschließlich über die Füllmasse innerhalb der Aussparung. Eine unmittelbare flächige Kontaktierung von Sammelleiter und der diesem zugeordneten elektrisch leitfähigen Schicht liegt nicht vor. Somit kann auf ein Entfernen der Trägerfolien verzichtet werden.

Werden beide Aussparungen als durch sämtliche Schichten der Mehrschichtfolie hindurchragende Durchgangslöcher ausgeführt, so sollte ein Kurzschluss zwischen den Flächenelektroden der Mehrschichtfolie vermieden werden. Dazu werden die erste elektrisch leitfähige Schicht und die zweite elektrisch leitfähige Schicht elektrisch voneinander isoliert. Dies ist mittels verschiedener Maßnahmen möglich. Beispielsweise kann eine selbstklebende Isolationsfolie in den entsprechenden Bereichen der Aussparung eingeführt werden. Erfindungsgemäß wird mindestens eine schichtfreie Trennlinie in die erste elektrisch leitfähige Schicht und mindestens eine schichtfreie Trennlinie in die zweite elektrisch leitfähige Schicht eingebracht. Mindestens eine Trennlinie trennt dabei innerhalb der ersten elektrisch leitfähigen Schicht einen elektrisch isolierten Randbereich umfassend mindestens eine zweite Aussparung oder mindestens eine erste Aussparung von der Hauptfläche der ersten elektrisch leitfähigen Schicht ab. Mindestens eine schichtfreie Trennlinie trennt in der zweiten elektrisch leitfähigen Schicht diejenige der mindestens einen ersten Aussparung oder der mindestens einen zweiten Aussparung von der Hauptfläche der zweiten elektrisch leitfähigen Schicht ab, die nicht bereits durch eine Trennlinie in der ersten elektrisch leitfähigen Schicht von der Hauptfläche der ersten elektrisch leitfähigen Schicht getrennt ist. Auch in der zweiten elektrisch leitfähigen Schicht entsteht dadurch ein elektrisch isolierter Randbereich umfassend mindestens eine Aussparung. Da die Trennlinie in der zweiten elektrisch leitfähigen Schicht benachbart zu der Aussparung (bzw. Gruppe von Aussparungen) gewählt wird, um die innerhalb der ersten elektrisch leitfähigen Schicht keine Trennlinie verläuft, ist sichergestellt, dass keine unmittelbare Kontaktierung der ersten und zweiten elektrisch leitfähigen Schicht erfolgt und ein Kurzschluss der Flächenelektroden vermieden wird.

Der erste Sammelleiter und der zweite Sammelleiter können unabhängig voneinander wahlweise auf der äußeren Oberfläche der ersten Trägerfolie, der zweiten Trägerfolie oder jeweils ein Sammelleiter auf der ersten und der zweiten Trägerfolie angebracht werden. Als äußere Oberfläche der Trägerfolien wird dabei die Oberfläche bezeichnet, die keine elektrisch leitfähige Schicht trägt und von der aktiven Schicht der Mehrschichtfolie weg weist. Da die Aussparungen als Durchgangslöcher realisiert sind, ist die Oberfläche, an der die Sammelleiter positioniert werden, frei wählbar, da die elektrisch leitfähige Füllmasse innerhalb der Aussparungen von beiden Folienoberflächen aus zugänglich ist. Wäre eine Aussparung nicht durchgehend ausgeführt, so versteht es sich, dass der entsprechende Sammelleiter an der Oberfläche angebracht werden müsste, an der die elektrisch leitfähige Füllmasse zugänglich ist.

Die Entschichtung einzelner Trennlinien in der elektrisch leitfähigen Schicht erfolgt vorzugsweise durch einen Laserstrahl. Verfahren zum Strukturieren dünner Metallfilme sind beispielsweise aus EP 2 200 097 A1 oder EP 2 139 049 A1 bekannt. Die Breite der Entschichtung beträgt bevorzugt 10 µm bis 1000 µm, besonders bevorzugt 30 µm bis 200 µm und insbesondere 70 µm bis 140 µm. In diesem Bereich findet eine besonders saubere und rückstandsfreie Entschichtung durch den Laserstrahl statt. Die Entschichtung mittels Laserstrahl ist besonders vorteilhaft, da die entschichteten Linien optisch sehr unauffällig sind und das Erscheinungsbild und die Durchsicht nur wenig beeinträchtigen.

In einer bevorzugten Ausführungsform sind jeweils mindestens zwei erste Aussparungen und mindestens zwei zweite Aussparungen in die Mehrschichtfolie eingebracht sind. Es handelt sich somit um zwei Gruppen von Aussparungen, die sich dadurch unterscheiden zu welcher der elektrisch leitfähigen Schichten ein elektrischer Kontakt über die elektrisch leitfähige Füllmasse hergestellt wird. Bei Anwendung mehrerer erster bzw. zweiter Aussparungen erfolgt die elektrische Kontaktierung der elektrisch leitfähigen Schichten somit nicht nur an einer einzigen Kontaktstelle. Dadurch kann ein gleichmäßigerer Stromfluss entlang der Flächenelektroden und ein damit einhergehendes verbessertes Schaltverhalten der aktiven Schicht der Mehrschichtfolie erreicht werden.

Bevorzugt sind mehrere erste Aussparungen und mehrere zweite Aussparungen in die Mehrschichtfolie eingebracht. Die ersten Aussparungen verlaufen dabei im Wesentlichen entlang des ersten Sammelleiters, während die zweiten Aussparungen im Wesentlichen entlang des zweiten Sammelleiters verlaufen. Somit ergeben sich mehrere elektrische Kontaktierungspunkte zwischen Flächenelektroden und Sammelleitern entlang der Sammelleiter, wodurch ein gleichmäßiges Schaltbild der aktiven Schicht erreicht wird.

In einer vorteilhaften Ausführungsform sind die Aussparungen entlang der gesamten Länge der Sammelleiter angeordnet, wobei der Abstand zweier benachbarter erster Aussparungen entlang des ersten Sammelleiters und/oder der Abstand zweier benachbarter zweiter Aussparungen entlang des zweiten Sammelleiters zwischen 2 mm und 200 mm, bevorzugt zwischen 5 mm und 100 mm, besonders bevorzugt zwischen 10 mm und 50 mm liegt. Diese Bereiche haben sich als besonders vorteilhaft hinsichtlich eines homogenen Schaltverhaltens erwiesen.

In Versuchen zur Kontaktierung von schaltbaren Mehrschichtfolien hat sich gezeigt, dass in der Regel auch mittels einer einzelnen ersten Aussparung und einer einzelnen zweiten Aussparung eine hinreichend gute Kontaktierung erreicht werden kann. In einem solchen Fall fließt die gesamte elektrische Leistung über diese einzelne Aussparung, wodurch eine unerwünschte lokale Erwärmung auftreten kann. Dies lässt sich durch Vorsehen mehrerer erster Aussparungen und mehrerer zweiter Aussparungen vermeiden, da die elektrische Leistung auf mehrere Kontaktierungsstellen (Aussparungen) verteilt wird und die Erwärmung pro Kontaktstelle entsprechend geringer ausfällt. Des Weiteren ist mit steigender Anzahl von Aussparungen eine verbesserte Homogenität der Stromzufuhr über die Fläche der Mehrschichtfolie zu erwarten. Bei einem PDLC-Element als Mehrschichtfolie äußert sich dies beispielsweise dahingehend, dass im transparent geschalteten Zustand eine geringere Trübung auftritt. In PDLC-Elementen orientieren sich die in der aktiven Schicht der Mehrschichtfolie enthaltenden Flüssigkristalle bei Anlegen einer Spannung parallel zueinander, wodurch die Transmission von Licht durch die Mehrschichtfolie erhöht ist. Eine Trübung ist in diesem transparent geschalteten Zustand unerwünscht. Durch die Verwendung mehrerer Kontaktierungsstellen (Aussparungen) pro Sammelleiter lässt sich eine unerwünschte Resttrübung vermeiden.

Die Zahl der Aussparungen sollte dennoch im Hinblick auf den Produktionsaufwand möglichst gering gehalten werden. Die Erfinder haben herausgefunden, dass sich mit einer Anzahl von zumindest einer Aussparung pro 200 mm Länge, entlang derer eine Mehrschichtfolie kontaktiert und geschaltet werden soll, gute Ergebnisse erzielen lassen. Besonders bevorzugt werden auf einer Länge von 100 mm 1 bis 10, insbesondere 2 bis 8, beispielsweise 6 Aussparungen zur Kontaktierung vorgesehen.

Die elektrisch leitfähige Füllmasse ist eine Metallpaste enthaltend mindestens ein leitfähiges Metall oder eine leitfähige Metalllegierung. Bevorzugt ist die elektrisch leitfähige Metallpaste eine Silberpaste. Im Sinne der Erfindung sind kommerziell erhältliche Silberdruckpasten zur Anwendung auf Glas als elektrisch leitfähige Füllmasse geeignet. Diese sind dem Fachmann hinlänglich bekannt.

Die erste elektrisch leitfähige Schicht und die zweite elektrisch leitfähige Schicht enthalten zumindest ein Metall, eine Metalllegierung oder ein transparentes leitfähiges Oxid, bevorzugt ein transparentes leitfähiges Oxid, und weisen eine Dicke von 10 nm bis 2 µm auf. Die elektrisch leitfähigen Schichten sind bevorzugt transparent. Transparent bedeutet hier durchlässig für elektromagnetische Strahlung, vorzugsweise elektromagnetische Strahlung einer Wellenlänge von 300 nm bis 1.300 nm und insbesondere für sichtbares Licht. Erfindungsgemäße elektrisch leitfähige Schichten sind beispielsweise aus DE 20 2008 017 611 U1, EP 0 847 965 B1 oder WO2012/052315 A1 bekannt. Sie enthalten typischerweise eine oder mehrere, beispielsweise zwei, drei oder vier elektrisch leitfähige, funktionelle Einzelschichten. Die funktionellen Einzelschichten enthalten bevorzugt zumindest ein Metall, beispielsweise Silber, Gold, Kupfer, Nickel und/oder Chrom, oder eine Metalllegierung. Die funktionellen Einzelschichten enthalten besonders bevorzugt mindestens 90 Gew. % des Metalls, insbesondere mindestens 99,9 Gew. % des Metalls. Die funktionellen Einzelschichten können aus dem Metall oder der Metalllegierung bestehen. Die funktionellen Einzelschichten enthalten besonders bevorzugt Silber oder eine silberhaltige Legierung. Solche funktionellen Einzelschichten weisen eine besonders vorteilhafte elektrische Leitfähigkeit bei gleichzeitiger hoher Transmission im sichtbaren Spektralbereich auf. Die Dicke einer funktionellen Einzelschicht beträgt bevorzugt von 5 nm bis 50 nm, besonders bevorzugt von 8 nm bis 25 nm. In diesem Dickenbereich wird eine vorteilhaft hohe Transmission im sichtbaren Spektralbereich und eine besonders vorteilhafte elektrische Leitfähigkeit erreicht.

Die elektrisch leitfähige Schicht kann prinzipiell jede Schicht sein, die elektrisch kontaktiert werden kann.

Bevorzugt enthalten die erste Trägerfolie und/oder die zweite Trägerfolie zumindest ein im Autoklavprozess nicht vollständig aufschmelzendes Polymer, bevorzugt Polyethylenterephthalat (PET). Besonders bevorzugt bestehen die erste und die zweite Trägerfolie aus einer PET-Folie. Die erfindungsgemäßen Trägerfolien sind bevorzugt transparent Die Dicke der Trägerfolien beträgt bevorzugt von 0,025 mm bis 0,400 mm, insbesondere von 0,050 mm bis 0,200 mm. Die erfindungsgemäßen elektrisch leitfähigen Schichten sind bevorzugt auf einer Oberfläche der Trägerfolie angeordnet, das heißt auf genau einer der beiden Seiten der Trägerfolie (also auf deren Vorderseite oder deren Rückseite). Die Trägerfolien sind dabei im Schichtstapel der Mehrschichtfolie so ausgerichtet, dass die elektrisch leitfähigen Schichten benachbart zur aktiven Schicht angeordnet sind und als deren Flächenelektroden fungieren.

Je nach Ausgestaltung der aktiven Schicht kann die Mehrschichtfolie die verschiedensten dem Fachmann bekannten elektrisch schaltbaren Funktionselemente ergeben. Die aktive Schicht ist bevorzugt eine SPD-, ein PDLC-, eine elektrochrome oder eine elektrolumineszente Schicht.

Ein SPD-Funktionselement (*suspended particle device*) enthält eine aktive Schicht umfassend suspendierte Partikel, wobei die Absorption von Licht durch die aktive Schicht mittels Anlegen einer Spannung an die Flächenelektroden veränderbar ist. Die Absorptionsänderung beruht auf der Ausrichtung der stäbchenartigen Partikel im elektrischen Feld bei angelegter elektrischer Spannung. SPD-Funktionselemente sind beispielsweise aus EP 0876608 B1 und WO 2011033313 A1 bekannt.

Ein PDLC-Funktionselement (*polymer dispersed liquid crystal*) enthält eine aktive Schicht umfassend Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Ein solches Funktionselement ist beispielsweise aus DE 102008026339 A1 bekannt.

Bei einem elektrochromen Funktionselement ist die aktive Schicht des Funktionselements eine elektrochemisch aktive Schicht. Die Transmission von sichtbarem Licht ist vom Einlagerungsgrad von Ionen in die aktive Schicht abhängig, wobei die Ionen beispielsweise durch eine Ionenspeicherschicht zwischen aktiver Schicht und einer Flächenelektrode bereitgestellt werden. Die Transmission kann durch die an die Flächenelektroden angelegte Spannung, welche eine Wanderung der Ionen hervorruft, beeinflusst werden. Geeignete funktionelle Schichten enthalten beispielsweise zumindest Wolframoxid oder Vanadiumoxid. Elektrochrome Funktionselemente sind beispielsweise aus WO 2012007334 A1, US 20120026573 A1, WO 2010147494 A1 und EP 1862849 A1 bekannt.

Bei elektrolumineszenten Funktionselementen enthält die aktive Schicht elektrolumineszente Materialen, insbesondere organische elektrolumineszente Materialen, deren Lumineszenz durch Anlegen einer Spannung angeregt wird. Elektrolumineszente Funktionselemente sind beispielsweise aus US 2004227462 A1 und WO 2010112789 A2 bekannt. Das elektrolumineszente Funktionselement kann als einfache Lichtquelle verwendet werden, oder als Display mit dem beliebige Darstellungen gezeigt werden können.

Die Erfindung betrifft darüber hinaus eine Verbundscheibe mindestens umfassend die erfindungsgemäße Mehrschichtfolie. Die Mehrschichtfolie ist dabei über eine erste thermoplastische Folie und eine zweite thermoplastische Folie zwischen einer ersten Scheibe und einer zweiten Scheibe einlaminiert. Die thermoplastischen Folien stellen dabei die Anbindung der Trägerfolie der Mehrschichtfolie an die Glasscheiben der Verbundscheibe sicher.

Die erste thermoplastische Folie und eine zweite thermoplastische Folie sind durch ihre thermoplastischen Eigenschaften geeignet eine adhäsive Verbindung zueinander und zu angrenzenden Scheiben und/oder angrenzenden Funktionselementen herzustellen. Beim Laminiervorgang beginnen die thermoplastischen Folien unter Hitzeeinwirkung zu fließen, wodurch diese an angrenzenden Elementen anhaften sowohl mit diesen als auch miteinander verbunden werden. Bevorzugt enthalten die erste und die zweite thermoplastische Folie Polyvinylbutyral (PVB), Ethylenvinylacetat (EVA) und/oder Polyurethan (PU), besonders bevorzugt PVB. Diese Materialien sind für die thermoplastische Zwischenschicht von Verbundscheiben üblich und stellen eine adhäsive Verbindung zu Glas her. Somit ist eine gute Verbindung gewährleistet.

Die erste Scheibe und/oder die zweite Scheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polycarbonat, Polymethylmethacrylat und/oder Gemische davon. Die erste Scheibe und/oder die zweite Scheibe sind bevorzugt transparent, insbesondere für die Verwendung der Scheibe als Windschutzscheibe oder Rückscheibe eines Fahrzeugs oder anderen Verwendungen bei denen eine hohe Lichttransmission erwünscht ist. Als transparent im Sinne der Erfindung wird dann eine Scheibe verstanden, die eine Transmission im sichtbaren Spektralbereich von größer 70 % aufweist. Für Scheiben, die nicht im verkehrsrelevanten Sichtfeld des Fahrers liegen, beispielsweise für Dachscheiben, kann die Transmission aber auch viel geringer sein, beispielsweise größer als 5 %. An den außenseitigen Oberflächen der ersten und der zweiten Scheibe können prinzipiell beliebige weitere Scheiben angeordnet sein und mit diesen über Lamination unter Zwischenlage thermoplastischer Folien oder auch über Abstandshalter im Falle einer Isolierverglasung verbunden sein.

Die Dicke der ersten Scheibe und/oder der zweiten Scheibe liegt zwischen 0,3 mm und 25 mm, wobei die Scheibendicke stark abhängig ist von der Anwendung der Scheibe.

Für Anwendungen im Bereich der Gebäudeverglasung können die Scheibendicken beispielsweise eine Dicke im Bereich von 2 mm bis 10 mm aufweisen.

Besonders im Automobilbereich ist in den letzten Jahren ein Trend in Richtung immer geringerer Glasdicken zu verzeichnen, wodurch Einsparungen hinsichtlich des Fahrzeuggewichts möglich werden. Die Scheibendicken einer Automobilverglasung, insbesondere einer Windschutzscheibe, liegen für die Innenscheibe in der Regel im Bereich von 0,3 mm bis 2,5 mm und für die Außenscheibe im Bereich von 0,8 mm bis 2,5 mm. Eine asymmetrische Dickenkombination, bei der die Dicke der Außenscheibe größer ist als die Dicke der Innenscheibe, ist besonders bei einer geringen Gesamtdicke vorteilhaft im Hinblick auf eine verbesserte Stabilität der Verbundscheibe.

In einer bevorzugten Ausführungsform ist die Verbundscheibe eine Windschutzscheibe, wobei die Dicke der Außenscheibe zwischen 0,8 mm und 2,1 mm liegt und die Dicke der Innenscheibe zwischen 0,5 mm und 1,8 mm liegt.

In einer weiteren bevorzugten Ausführungsform der Erfindung ist die Verbundscheibe eine Dachscheibe eines Kraftfahrzeugs, wobei die Dicke der Außenscheibe zwischen 1,1 mm und 2,1 mm liegt und die Dicke der Innenscheibe zwischen 0,5 mm und 1,6 mm liegt.

Das Verbundglas ist in seiner Ausführungsform als Fahrzeugverglasung bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Das Verbundglas kann aber auch plan sein, beispielsweise wenn es als Scheibe für Busse, Züge, Traktoren oder als Gebäudeverglasung vorgesehen ist.

Die erste Scheibe und/oder die zweite Scheibe können thermisch oder chemisch vorgespannt, teilvorgespannt oder nicht vorgespannt sein.

Das Verbundglas kann auch mit einer Zusatzfunktion versehen werden, indem die thermoplastische Zwischenschicht funktionelle Einlagerungen aufweist, beispielsweise Einlagerungen mit IR-absorbierenden, UV-absorbierenden, farbgebenden oder akustischen Eigenschaften. Die Einlagerungen sind beispielsweise organische oder anorganische Ionen, Verbindungen, Aggregate, Moleküle, Kristalle, Pigmente oder Farbstoffe.

Insbesondere bei Verwendung der erfindungsgemäßen Verbundscheibe in Fahrzeugen, zum Beispiel als Windschutzscheibe, ist es vorteilhaft darüberhinausgehende Funktionen zu implementieren um die negativen Auswirkungen von Witterungseinflüssen wie starker Sonneneinstrahlung oder Eisbildung zu verringern. Dazu können beispielsweise sogenannte Low-E-Beschichtungen und/oder heizbare Beschichtungen auf der Innenseite der Innenscheibe oder der Außenscheibe aufgebracht sein. Geeignete Materialzusammensetzungen einer elektrisch heizbaren Beschichtung, die auch als Low-E-Beschichtung fungiert, sind beispielsweise WO 2013/104439 und WO 2013/104438 zu entnehmen.

Die Erfindung wird weiter gelöst durch ein Verfahren zur Herstellung einer erfindungsgemäßen Mehrschichtfolie mit elektrisch schaltbaren optischen Eigenschaften. Dabei wird zunächst eine Mehrschichtfolie umfassend flächenmäßig in dieser Reihenfolge angeordnet eine erste Trägerfolie, eine erste elektrisch leitfähige Schicht, eine aktive Schicht, eine zweite elektrisch leitfähige Schicht und eine zweite Trägerfolie, bereitgestellt. In der Mehrschichtfolie wird mindestens eine erste Aussparung als Durchgangsloch erzeugt. Die Aussparungen können mit diversen dem Fachmann bekannten Schneidetechniken erzeugt werden. Bevorzugt werden die Aussparungen durch Ausstanzen oder Laserschneiden erzeugt. Diese mindestens eine erste Aussparung wird mit einer elektrisch leitfähigen Füllmasse verfüllt, wobei die elektrisch leitfähige Füllmasse die Aussparung im Wesentlichen vollständig ausfüllt. Dadurch steht die elektrisch leitfähige Füllmasse in unmittelbarem Kontakt zu der ersten elektrisch leitfähigen Schicht, bzw. wenn die Aussparung als Durchgangsloch ausgeführt ist, auch zur zweiten elektrisch leitfähigen Schicht des Schichtstapels. Vor oder nach dem Verfüllen der Aussparung mit der elektrisch leitfähigen Füllmasse wird auf die äußere Oberfläche der ersten Trägerfolie im Bereich der ersten Aussparung ein erster Sammelleiter aufgebracht. Die elektrisch leitfähige Füllmasse wird dabei mit dem ersten Sammelleiter elektrisch kontaktiert.

In dem Verfahren wird vor, während oder nach der Erzeugung der ersten Aussparung auch mindestens eine zweite Aussparung erzeugt. Im Bereich der zweiten Aussparung werden in Form eines Durchgangslochs die Trägerfolien, die aktive Schicht und die elektrisch leitfähigen Schichten entfernt. Die mindestens eine zweite Aussparung wird mit einer elektrisch leitfähigen Füllmasse verfüllt und auf die äußere Oberfläche der zweiten Trägerfolie wird im Bereich der elektrisch leitfähigen Füllmasse ein zweiter Sammelleiter aufgebracht und mit der elektrisch leitenden Füllmasse elektrisch kontaktiert. Die Reihenfolge dieser beiden Schritte ist variabel. Zumindest die zweite elektrisch leitfähige Schicht wird demnach über die elektrisch leitfähige Füllmasse mit dem zweiten Sammelleiter kontaktiert.

Bevorzugt wird der Sammelleiter vor Verfüllen der Aussparungen auf diese aufgelegt. Jeweils eine Öffnung der Aussparungen ist somit von einem Sammelleiter verschlossen. Das Einfüllen der elektrisch leitfähigen Füllmasse erfolgt dabei über die Öffnung der Aussparung, die nicht von einem Sammelleiter bedeckt ist. Dies ist vorteilhaft, da die Füllmasse in ihrem nicht ausgehärteten Zustand an dem benachbarten Sammelleiter, der die Aussparung abdeckt, anhaftet und diesen dabei auch elektrisch kontaktiert. Ein zusätzlicher Schritt zur elektrischen Kontaktierung von Sammelleiter und elektrisch leitfähiger Füllmasse entfällt demnach.

Alternativ dazu kann der Sammelleiter auch über andere dem Fachmann bekannte Maßnahmen elektrisch leitend an der Füllmasse angebunden werden, beispielsweise einen elektrisch leitfähigen Klebstoff oder eine Lötverbindung.

Werden die erste und die zweite Aussparung erfindungsgemäß in Form von Durchgangslöchern erzeugt, so steht die in den Aussparungen eingebrachte Füllmasse zunächst zur ersten und zur zweiten elektrisch leitfähigen Schicht in Kontakt. In Nachbarschaft der Aussparungen wird in diesem Fall in einer der beiden elektrisch leitfähigen Schichten eine entschichtete Trennlinie erzeugt. Die Trennlinien werden dabei so eingebracht, dass die erste oder die ersten Aussparungen mit lediglich einer der elektrisch leitfähigen Schichten in Kontakt stehen und die zweite oder die zweiten Aussparungen mit lediglich der anderen elektrisch leitfähigen Schicht in Kontakt stehen. Die Entschichtung einzelner Trennlinien in der elektrisch leitfähigen Schicht erfolgt vorzugsweise durch einen Laserstrahl.

Die Trennlinien können an beliebiger Stelle des Verfahrens erzeugt werden. Die Trennlinien werden dabei bevorzugt mittels eines Lasers durch die der zu bearbeitenden elektrisch leitfähigen Schicht nächstliegende Trägerfolie hindurch erzeugt. Die Wellenlänge der Laserstrahlung des Lasers, mit dem die Trennlinien in die elektrisch leitfähige Schicht eingebracht werden, ist geeignet so zu wählen, dass die elektrisch leitfähige Schicht eine ausreichend hohe Absorption der Laserstrahlung aufweist und dass die Trägerfolie eine ausreichend geringe Absorption der Laserstrahlung aufweist. Dadurch wird die Trennlinie vorteilhaft selektiv in die elektrisch leitfähige Schicht eingebracht, ohne dass die Trägerfolie beschädigt wird. Dabei ist zu berücksichtigen, dass durch die Fokussierung der Laserstrahlung die Leistungsdichte in der elektrisch leitfähigen Schicht deutlich größer ist als in der Trägerschicht.

Es hat sich als vorteilhaft erwiesen die Wellenlänge der Strahlung des Lasers bei Erzeugung der Trennlinien im Bereich von 150 nm bis 1200 nm, bevorzugt im Bereich von 200 nm bis 500 nm, besonders bevorzugt im Bereich von 250 nm bis 400 nm zu wählen. Es hat sich gezeigt, dass dieser Bereich für die Wellenlängen bei der Verwendung üblicher elektrisch leitfähiger Schichten und üblicher Trägerfolien besonders geeignet ist. Der Wellenlängenbereich des Lasers ist dabei so gewählt, dass die Trennlinien selektiv in die elektrisch leitfähigen Schichten eingebracht werden.

Die erste und die zweite elektrisch leitfähige Schicht werden vor Verfahrensschritt a) durch an sich bekannte Verfahren auf den Trägerfolien abgeschieden. Beispielhaft ist dabei auf magnetfeldunterstützte Kathodenzerstäubung zu verweisen. Das ist besonders vorteilhaft im Hinblick auf eine einfache, schnelle, kostengünstige und gleichmäßige Beschichtung des Substrats. Die elektrisch leitfähige Beschichtung kann aber auch beispielsweise durch Aufdampfen, chemische Gasphasenabscheidung (chemical vapour deposition, CVD), plasmagestützte Gasphasenabscheidung (PECVD) oder durch nasschemische Verfahren aufgebracht werden.

Verfahren zum Auftragen aktiver Schichten, beispielsweise SPD-, PDLC-, elektrochromen oder elektrolumineszenten Schichten, sind dem Fachmann bekannt und in der Literatur hinreichend beschrieben.

Die in dem erfindungsgemäßen Verfahren hergestellte Mehrschichtfolie kann mittels dem Fachmann bekannter Verfahren in einer Verbundscheibe integriert werden.

Die erste und die zweite Scheibe der Verbundscheibe können gebogen sein, beispielsweise bei Einsatz als Fahrzeugverglasung. Die Scheiben können einzelnen oder gemeinsam gebogen werden. Bevorzugt werden die Scheiben gemeinsam (d.h. zeitgleich und durch dasselbe Werkzeug) kongruent gebogen, weil dadurch die Form der Scheiben für die später erfolgende Laminierung optimal aufeinander abgestimmt ist.

Soll die Verbundscheibe als gebogene Fahrzeugverglasung fungieren, so wird zumindest die als Außenscheibe verwendete Scheibe vor der Lamination einem Biegeprozess unterzogen. In einer bevorzugten Ausführung wird die als Innenscheibe eingesetzte Scheibe ebenfalls einem Biegeprozess unterzogen. Dies ist insbesondere bei starken Biegungen in mehrere Richtungen des Raums (sogenannte dreidimensionale Biegungen) vorteilhaft.

Alternativ wird die als Innenscheibe verwendete Scheibe nicht vorgebogen. Dies ist besonders bei Scheiben mit sehr geringen Dicken vorteilhaft, da diese eine folienartige Flexibilität aufweisen und so an die vorgebogene Außenscheibe angepasst werden können, ohne selbst vorgebogen werden zu müssen.

Das Verbinden der ersten Scheibe und der zweiten Scheibe zu einer Verbundscheibe erfolgt bevorzugt unter Einwirkung von Hitze, Vakuum und/oder Druck. Es können an sich bekannte Verfahren zur Herstellung einer Verbundscheibe verwendet werden.

Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumring-verfahren arbeiten beispielsweise bei etwa 200 mbar und 80 °C bis 110 °C. Die erste Scheibe, die thermoplastischen Folien, die zumindest abschnittsweise vorhandene Mehrschichtfolie und die zweite Scheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die erste Scheibe und die zweite Scheibe innerhalb von beispielsweise etwa 60 Minuten bei verminderten Drücken von 0,01 mbar bis 800 mbar und Temperaturen von 80°C bis 170°C laminiert werden.

Ein weiterer Aspekt der Erfindung umfasst die Verwendung der erfindungsgemäßen Verbundscheibe in Gebäuden, insbesondere im Zugangsbereich, Fensterbereich, Dachbereich oder Fassadenbereich, als Einbauteil in Möbeln und Geräten, in Fortbewegungsmitteln für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und / oder Dachscheibe.

Im Folgenden wird die Erfindung anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein.

Es zeigen:
- Figur 1a: eine Draufsicht auf eine erfindungsgemäße Mehrschichtfolie 1 mit elektrisch schaltbaren optischen Eigenschaften, wobei die elektrisch leitfähigen Schichten 3 und 4 über eine elektrisch leitfähige Füllmasse 8 mit Sammelleitern 9.1 und 9.2 kontaktiert sind,
- Figur 1b: einen Querschnitt durch die Mehrschichtfolie 1 gemäß Figur 1a entlang der Schnittlinie AA',
- Figur 2: die erfindungsgemäße Verbundscheibe 11 umfassend die Mehrschichtfolie 1 gemäß Figuren 1a und 1b, die mittels zweier thermoplastischer Folien 14, 15 zwischen den zwei Scheiben 12, 13 einlaminiert ist, gezeigt entlang der Schnittlinie AA' analog Figur 1a,
- Figur 3: eine Ausführungsform des erfindungsgemäßen Verfahrens.

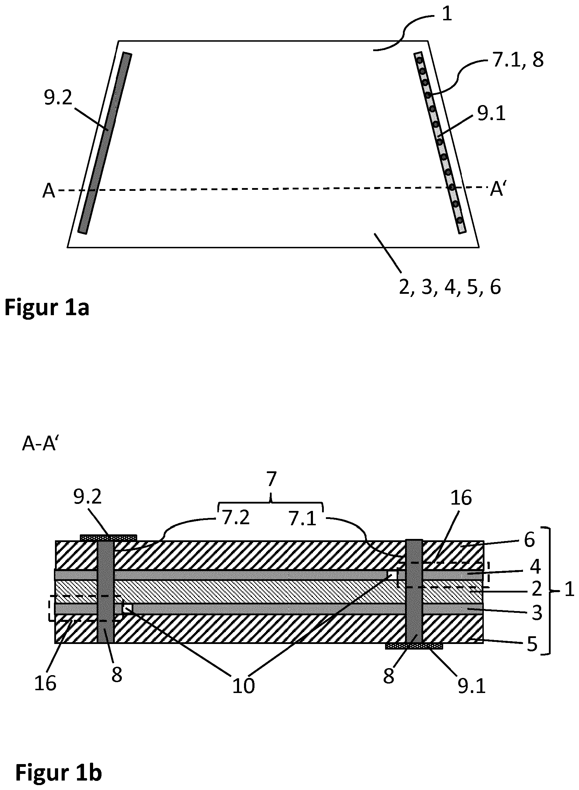

Figuren 1a und 1b zeigen eine erfindungsgemäße Mehrschichtfolie 1 mit elektrisch schaltbaren optischen Eigenschaften. Die Mehrschichtfolie 1 umfasst eine erste Trägerfolie 5 und eine zweite Trägerfolie 6, wobei auf einer Oberfläche der ersten Trägerfolie 5 eine erste elektrisch leitfähige Schicht 3 aufgebracht ist, während eine Oberfläche der zweiten Trägerfolie 6 eine zweite elektrisch leitfähige Schicht 4 aufweist. Zwischen den elektrisch leitfähigen Schichten 3, 4 befindet sich eine aktive Schicht 2. Die aktive Schicht 2 ist eine PDLC-Schicht. Die Trägerfolien 5, 6 bestehen aus jeweils einer PET-Folie mit einer Dicke von 200 µm. Die elektrische leitfähigen Schichten 3, 4 sind Schichtensysteme, welche beispielsweise drei elektrisch leitfähige Silberschichten enthalten, die durch dielektrische Schichten voneinander getrennt sind. In Nachbarschaft zu zwei einander gegenüberliegenden Kanten der Mehrschichtfolie 1 ist eine Reihe von ersten Aussparungen 7.1 entlang einer Kante und eine Reihe von zweiten Aussparungen 7.2 entlang der gegenüberliegenden Kante angebracht. Im Bereich der Aussparungen 7 ist der Schichtstapel aus erster Trägerfolie 5, erster elektrisch leitfähiger Schicht 3, aktiver Schicht 2, zweiter elektrisch leitfähiger Schicht 4 und Trägerfolie 6 vollständig entfernt. Die ersten Aussparungen 7.1 und die zweiten Aussparungen 7.2 sind demnach als Durchgangslöcher gefertigt. Die Aussparungen 7 weisen einen Durchmesser von 6 mm auf und sind entlang des jeweiligen Sammelleiters 9, im Wesentlichen parallel zur nächstliegenden Kante der Mehrschichtfolie 1, angeordnet. Die ersten Aussparungen 7.1 weisen einen Abstand von ungefähr 16,7 mm zueinander (zur jeweils nächstliegenden benachbarten Aussparung) auf. Die zweiten Aussparungen 7.2 weisen analog dazu ebenfalls einen Abstand von ungefähr 16,7 mm zueinander auf. Im Bereich der ersten Aussparungen 7.1 ist ein erster Sammelleiter 9.1 auf der äußeren Oberfläche der ersten Trägerfolie 5 aufgebracht. Der erste Sammelleiter 9.1 deckt dabei sämtliche der ersten Aussparungen 7.1 ab. Als äußere Oberfläche der Trägerfolien wird in diesem Sinne die von der aktiven Schicht weg zeigende Oberfläche bezeichnet. An der äußeren Oberfläche der zweiten Trägerfolie 6 sind die Aussparungen 7.1 offenliegend und nicht durch einen Sammelleiter abgedeckt. Über diese Öffnung wurde eine elektrisch leitfähige Füllmasse 8, hier eine Silberdruckpaste, in die ersten Aussparungen 7.1 eingefüllt. Die elektrisch leitfähige Füllmasse 8 füllt die ersten Aussparungen 7.1 im Wesentlichen vollständig aus. Der Übergang zwischen Füllmasse und dem Querschnitt der Mehrschichtfolie 1 muss dabei nicht zwangsläufig geradlinig verlaufen. Je nach Konfiguration der Mehrschichtfolie1 und der Füllmasse 8 kann die Silberdruckpaste lokal begrenzt in die Mehrschichtfolie 1, beispielsweise in die aktive Schicht 2, vordringen. Demnach besteht eine große Kontaktfläche zwischen Füllmasse 8 und Mehrschichtfolie 1, so dass eine gute mechanische und elektrische Anbindung gewährleistet ist. Die Füllmasse 8 kontaktiert die erste elektrisch leitfähige Schicht 3 und die zweite elektrisch leitfähige Schicht 4 elektrisch leitend mit dem ersten Sammelleiter 9.1. Analog dazu ist im Bereich der zweiten Aussparungen 7.2 ein zweiter Sammelleiter 9.2 auf der äußeren Oberfläche der zweiten Trägerfolie 6 aufgebracht. Der zweite Sammelleiter 9.2 deckt sämtliche der zweiten Aussparungen 7.2 ab. An der dem zweiten Sammelleiter 9.2 gegenüberliegenden äußeren Oberfläche der ersten Trägerfolie 5 sind die Aussparungen 7.2 offenliegend. Auch hier kann diese Öffnung zum Befüllen mit der elektrisch leitfähigen Füllmasse 8 in Form einer Silberdruckpaste genutzt werden. Die elektrisch leitfähige Füllmasse 8 füllt die zweiten Aussparungen 7.2 im Wesentlichen vollständig aus und kann sich auch, wie für die ersten Aussparungen 7.1 beschrieben, in Teile der Mehrschichtfolie 1 ausbreiten. Die Füllmasse 8 innerhalb der zweiten Aussparungen 7.2 stellt einen elektrischen Kontakt zwischen der ersten elektrisch leitfähigen Schicht 3, der zweiten elektrisch leitfähigen Schicht 4 sowie dem zweiten Sammelleiter 9.2 her. Um einen unmittelbaren elektrischen Kontakt der beiden Sammelleiter 9 und einen damit einhergehenden Kurzschluss zu vermeiden, wird jeweils eine der elektrisch leitfähigen Schichten von jeweils einem der Sammelleiter elektrisch isoliert, so dass jeder Sammelleiter nur in Kontakt zu einer elektrisch leitfähigen Schicht steht. In diesem Fall ist in der ersten elektrisch leitfähigen Schicht 3 eine Trennlinie 10 eingebracht, die einen elektrisch isolierten Randbereich 16 umfassend die zweiten Aussparungen 7.2, von der verbleibenden Hauptfläche der Schicht 3 abtrennt. Zwischen der Hauptfläche der ersten elektrisch leitfähigen Schicht 3 und dem zweiten Sammelleiter 9.2 besteht somit nach Einbringen der Trennlinie 10 kein elektrischer Kontakt. Die Hauptfläche der ersten elektrisch leitfähigen Schicht 3 ist dabei die Fläche zwischen der in dieser befindlichen Trennlinie 10 und der ersten Aussparung 9.1. Analog dazu ist in der zweiten elektrisch leitfähigen Schicht 4 eine Trennlinie 10 eingebracht, die einen elektrisch isolierten Randbereich 16 umfassend die ersten Aussparungen 7.1, von der verbleibenden Hauptfläche der elektrisch leitfähigen Schicht 4 abtrennt. Zwischen der Hauptfläche der zweiten elektrisch leitfähigen Schicht 4 und dem ersten Sammelleiter 9.1 besteht somit nach Einbringen der Trennlinie 10 ebenfalls kein elektrischer Kontakt. Die Trennlinien 10 weisen eine Breite von 200 µm auf. Die Hauptfläche der zweiten elektrisch leitfähigen Schicht 4 ist dabei die Fläche zwischen der in dieser befindlichen Trennlinie 10 und der zweiten Aussparung 9.2. Generell ist bei Kontaktierung der elektrisch leitfähigen Schichten sicherzustellen, dass jeder elektrisch leitfähigen Schicht genau ein Sammelleiter zugeordnet ist. Die Sammelleiter können wahlweise auf der gleichen Trägerfolie angeordnet sein oder, wie in Figur 1b gezeigt, auf unterschiedlichen Trägerfolien positioniert werden. Die Sammelleiter 9 weisen eine Länge von 200 mm auf, gemessen entlang der Aussparungen 7 im Wesentlichen parallel zur Außenkante der Mehrschichtfolie 1. Die vorliegende Mehrschichtfolie soll als Sonnenblende in der Windschutzscheibe eines Kraftfahrzeugs eingesetzt werden. Die Sammelleiter 9 werden so angeordnet, dass diese, nach Lamination der Mehrschichtfolie in einer Verbundscheibe und Einbau der Verbundscheibe als Windschutzscheibe in einer Kraftfahrzeug-Karosserie, entlang der zu den A-Säulen benachbarten Scheibenkanten verlaufen. Entlang des ersten Sammelleiters 9.1 sind 12 erste Aussparungen 7.1 angebracht, während entlang des zweiten Sammelleiters 9.2 analog dazu 12 zweite Aussparungen 7.2 vorhanden sind. Auf diese Weise kann eine gute Kontaktierung der jeweiligen elektrisch leitfähigen Schicht 3, 4 gewährleistet und eine gleichmäßige Stromverteilung erreicht werden.

Die erfindungsgemäße elektrische Kontaktierung der elektrisch leitfähigen Schichten der Mehrschichtfolie über den Schichtquerschnitt stellt eine mechanisch stabile Kontaktierung sicher. Ferner wird eine Beschädigung der elektrisch leitfähigen Schichten vermieden. Im Vergleich dazu tritt nach dem Stand der Technik durch einen manuellen Rückschnitt des Schichtstapels im Randbereich und einer nachfolgenden Entfernung der aktiven Schicht häufig eine Beschädigung der freizulegenden elektrisch leitfähigen Schicht ein. Die aktive Schicht wird in der Regel durch Abwischen mit einem Lösungsmittel abgetragen, wobei beispielsweise die in einer PDLC-Schicht enthaltenen Flüssigkristalle Kratzer in der darunterliegenden elektrisch leitfähigen Schicht hinterlassen können. Darüber hinaus ist dieser Schritt schlecht automatisierbar, da die höchste Umsicht nötig ist um einerseits eine vollständige Entfernung der aktiven Schicht zu gewährleisten und andererseits die beschriebene Beschädigung der elektrisch leitfähigen Schicht zu vermeiden. Beides, sowohl Rückstände der aktiven Schicht als auch Kratzer, ziehen die Kontaktqualität wesentlich in Mitleidenschaft. Die erfindungsgemäße Mehrschichtfolie und das erfindungsgemäße Verfahren sind dem überlegen, da eine hohe Kontaktqualität ohne eventuelle Beschädigung der Schichten sichergestellt ist und die Herstellung der Mehrschichtfolie auf einfache Art und Weise automatisierbar ist.

Die erfindungsgemäße Mehrschichtfolie gemäß Figuren 1a und 1b ist in den gängigen, dem Fachmann bekannten, Verbundscheiben umfassend Mehrschichtfolien mit elektrisch steuerbaren optischen Eigenschaften einsetzbar. Das Abmaß der Mehrschichtfolie selbst sowie die Länge der Sammelleiter sind dabei von der gewünschten Anwendungsgröße abhängig. Mehrschichtfolien mit schaltbaren optischen Eigenschaften werden beispielsweise als Sonnenblenden in Windschutzscheiben eingesetzt. Dabei ist die Mehrschichtfolie nur in den Teil der Verbundscheibe eingesetzt, in dem die steuerbaren optischen Eigenschaften erwünscht sind. Bei einer Anwendung als Sonnenblende ist dies in der Regel, bezogen auf den Einbauzustand einer Windschutzscheibe, der obere der Dachkante der Karosserie benachbarte Scheibenanteil. Solch eine Sonnenblende hat beispielsweise eine Höhe von 20 cm. Der Zuschnitt der Mehrschichtfolie erfolgt dementsprechend. Es sind jedoch auch Anwendungen bekannt, in denen die Mehrschichtfolie großflächig in die Verbundscheibe integriert wird. Dazu gehören beispielsweise Verbundscheiben als Glasdächer von Kraftfahrzeugen. Häufig wird in solchen Fällen ein PDLC-Element im gesamten lichtdurchlässigen Bereich der Verbundscheibe eingebracht. Die Erfindung verbessert, wie beschrieben, die elektrische Kontaktierung bei allen dieser Ausführungsbeispiele.

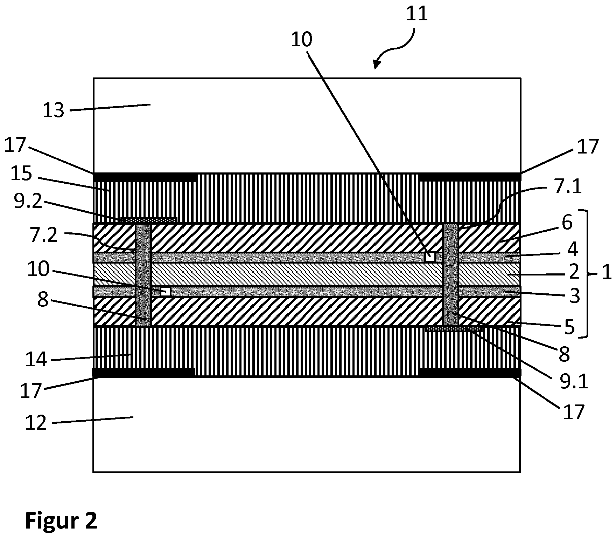

Figur 2 zeigt die erfindungsgemäße Verbundscheibe 11, wobei die Mehrschichtfolie 1 gemäß Figuren 1a und 1b, mittels zweier thermoplastischer Folien 14, 15 zwischen zwei Scheiben 12, 13 einlaminiert ist. Die Ansicht der Figur 2 entspricht einem Querschnitt der Verbundscheibe analog zu dem in Figur 1a gezeigten Querschnitt entlang der Schnittlinie AA'. Auf die erste Scheibe 12 ist eine erste thermoplastische Folie 14 aufgelegt, auf die thermoplastische Folie 14 folgt die Mehrschichtfolie 1 gemäß Figuren 1 a und 1b. Die Mehrschichtfolie 1 wird von einer zweiten thermoplastischen Folie 15 abgedeckt und der Schichtstapel durch die zweite Scheibe 13 abgeschlossen. Die thermoplastischen Folien 14, 15 weisen eine Dicke von jeweils 0,76 mm auf und bestehen aus PVB. Die Scheiben 12 und 13 bestehen aus Glas. Die Mehrschichtfolie 1 kann auch nur in Teilen der Verbundscheibe 11 eingelegt sein. Ein bevorzugtes Anwendungsbeispiel dafür ist der Einsatz von erfindungsgemäßen Mehrschichtfolien als Bandfilter einer Windschutzscheibe. In diesem Fall wäre die Mehrschichtfolie 1 nur in dem der, bezogen auf den Einbauzustand der Verglasung, Dachkante benachbarten Bereich der Verbundscheibe in den Folienverbund eingelegt. Im verbleibenden Bereich der Windschutzscheibe sind die Scheiben 12, 13 lediglich über die thermoplastischen Folien 14, 15 verbunden. Selbstverständlich können optional darüberhinausgehende Elemente, wie beispielsweise weitere elektrisch schaltbare Mehrschichtfolien oder andere Funktionselemente vorhanden sein. Der vereinfachten Darstellung halber ist eine dreidimensionale Biegung der Verbundscheibe in Figur 2 nicht dargestellt. Insbesondere bei Verwendung der Verbundscheibe als Fahrzeugverglasung ist diese jedoch bevorzugt vorhanden. Im Bereich der Aussparungen können die Scheiben 12, 13 optional mit einer opaken Beschichtung 17 versehen sein. Diese kaschiert die Aussparungen sowie die Sammelleiter, so dass diese für den Betrachter nicht sichtbar sind. Derartige Kaschierungen mittels Schwarzdruck sind dem Fachmann geläufig.

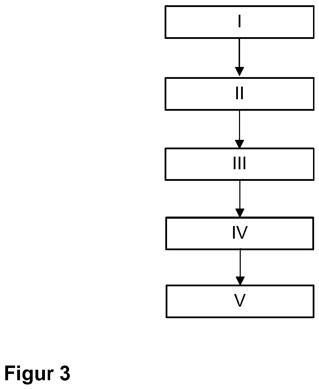

Figur 3 zeigt eine bevorzugte Ausführungsform des erfindungsgemäßen Verfahrens umfassend die Schritte:
I Bereitstellen einer Mehrschichtfolie 1,
II Einbringen einer Trennlinie 10 mittels Laser in die erste elektrisch leitfähige Schicht 3, die einen elektrisch isolierten Randbereich 16 von der verbleibenden Fläche der ersten elektrisch leitfähigen Schicht 3 abtrennt,
   und
   Einbringen einer Trennlinie 10 mittels Laser in die zweite elektrisch leitfähige Schicht 4, die einen elektrisch isolierten Randbereich 16 von der verbleibenden Fläche der zweiten elektrisch leitfähigen Schicht 4 abtrennt.
III Ausstanzen mehrerer erster Aussparungen 7.1 in Form von Durchgangslöchern im elektrisch isolierten Randbereich 16, der in Schritt II durch eine Trennlinie 10 in der ersten elektrisch leitfähigen Schicht 3 erzeugt wurde
   und
   Ausstanzen mehrerer zweiter Aussparungen 7.2 in Form von Durchgangslöchern im elektrisch isolierten Randbereich 16, der in Schritt II durch eine Trennlinie 10 in der zweiten elektrisch leitfähigen Schicht 4 erzeugt wurde,
IV Auflegen eines ersten Sammelleiters 9.1 auf die äußere Oberfläche der ersten Trägerfolie 5 im Bereich der ersten Aussparungen 7.1 und Fixieren des Sammelleiters 9.1 mittels eines Klebestreifens
   und
   Auflegen eines zweiten Sammelleiters 9.2 auf die äußere Oberfläche der zweiten Trägerfolie 6 im Bereich der zweiten Aussparungen 7.2 und Fixieren des Sammelleiters 9.2 mittels eines Klebestreifens,
V Verfüllen der ersten Aussparungen 7.1 und der zweiten Aussparungen 7.2 mit einer elektrisch leitfähigen Füllmasse 8.

Das Einbringen der Trennlinien gemäß Schritt II kann zu jedem beliebigen Zeitpunkt des Verfahrens erfolgen. Bevorzugt werden die Trennlinien unmittelbar nach Bereitstellen der Mehrschichtfolie eingebracht, da die Mehrschichtfolie zu diesem Zeitpunkt eine vollständig ebene Oberfläche besitzt und über keinerlei weitere Bauteile, wie Sammelleiter, verfügt. Dies erleichtert die automatisierte Laserbearbeitung, vor allem bezüglich des automatisierten Folientransportes.

Die resultierende erfindungsgemäße Mehrschichtfolie 1 weist eine mechanisch stabile und zuverlässige elektrische Kontaktierung der elektrisch leitfähigen Schichten 3, 4 über die Füllmasse 8 auf. Verbinden der Sammelleiter 9.1, 9.2 mit einer externen Spannungsquelle resultiert in einer an den elektrisch leitfähigen Schichten 3, 4 anliegenden Spannung. Die elektrisch leitfähigen Schichten 3, 4 fungieren als Flächenelektroden der dazwischenliegenden aktiven Schicht 2. Der erste Sammelleiter 9.1 ist dabei mit der zweiten elektrisch leitfähigen Schicht 4 kontaktiert, während die erste elektrisch leitfähige Schicht 3 durch den zweiten Sammelleiter 9.2 kontaktiert wird.

### Bezugszeichenliste

- 1: Mehrschichtfolie mit elektrisch schaltbaren optischen Eigenschaften
- 2: aktive Schicht der Mehrschichtfolie 1
- 3: erste elektrisch leitfähige Schicht der Mehrschichtfolie 1
- 4: zweite elektrisch leitfähige Schicht der Mehrschichtfolie 1
- 5: erste Trägerfolie der Mehrschichtfolie 1
- 6: zweite Trägerfolie der Mehrschichtfolie 1
- 7: Aussparungen
- 7.1: erste Aussparungen
- 7.2: zweite Aussparungen
- 8: elektrisch leitfähige Füllmasse
- 9: Sammelleiter
- 9.1: erster Sammelleiter
- 9.2: zweiter Sammelleiter
- 10: schichtfreie Trennlinie
- 11: Verbundscheibe
- 12: erste Scheibe
- 13: zweite Scheibe
- 14: erste thermoplastische Folie
- 15: zweite thermoplastische Folie
- 16: elektrisch isolierter Randbereich
- 17: opake Beschichtung

- A-A': Schnittlinie

## Patentansprüche

1. Mehrschichtfolie (1) mit elektrisch schaltbaren optischen Eigenschaften, mindestens umfassend in der Reihenfolge flächenmäßig angeordnet:
- eine erste Trägerfolie (5),
- eine erste elektrisch leitfähige Schicht (3),
- eine aktive Schicht (2),
- eine zweite elektrisch leitfähige Schicht (4) und
- eine zweite Trägerfolie (6),
wobei
- die Mehrschichtfolie (1) innerhalb ihrer Fläche mindestens eine erste Aussparung (7.1) aufweist und die mindestens eine erste Aussparung (7.1) in Form eines Durchgangslochs durch sämtliche Schichten der Mehrschichtfolie (1) hindurch ragt,
- die erste Aussparung (7.1) mit einer elektrisch leitfähigen Füllmasse (8) verfüllt ist, die die erste elektrisch leitfähige Schicht (3) innerhalb der ersten Aussparung (7.1) elektrisch leitend kontaktiert und
- ein erster Sammelleiter (9.1) die elektrisch leitende Füllmasse (8) elektrisch leitend kontaktiert,
wobei die Mehrschichtfolie (1) innerhalb ihrer Fläche mindestens eine zweite Aussparung (7.2) in Form eines Durchgangslochs durch sämtliche Schichten der Mehrschichtfolie (1) aufweist, die zweite Aussparung (7.2) mit einer elektrisch leitfähigen Füllmasse (8) verfüllt ist, die die zweite elektrisch leitfähige Schicht (4) innerhalb der zweiten Aussparung (7.2) elektrisch leitend kontaktiert und ein zweiter Sammelleiter (9.2) die elektrisch leitende Füllmasse (8) elektrisch leitend kontaktiert,
wobei die elektrisch leitende Anbindung zwischen den Sammelleitern (9.1, 9.2) und den jeweiligen elektrisch leitfähigen Schichten (3, 4) ausschließlich über die Füllmasse (8) erfolgt, und wobei
- die Aussparungen (7) durch sämtliche Schichten der Mehrschichtfolie (1) hindurchragen,
- mindestens eine schichtfreie Trennlinie (10) in der ersten elektrisch leitfähigen Schicht (3) eingebracht ist, die einen elektrisch isolierten Randbereich (16) umfassend die mindestens eine erste Aussparung (7.1) oder die mindestens eine zweite Aussparung (7.2) von der Hauptfläche der ersten elektrisch leitfähigen Schicht (3) abtrennt,
- mindestens eine schichtfreie Trennlinie (10) in der zweiten elektrisch leitfähigen Schicht (4) eingebracht ist, die einen elektrisch isolierten Randbereich (16) von der Hauptfläche der zweiten elektrisch leitfähigen Schicht (4) abtrennt, wobei der elektrisch isolierte Randbereich (16) der zweiten elektrisch leitfähigen Schicht (4) diejenigen der Aussparungen (7) umfasst, die sich nicht innerhalb des elektrisch isolierten Randbereichs (16) der ersten elektrisch leitfähigen Schicht (3) erstrecken.

2. Mehrschichtfolie (1) nach Anspruch 1, wobei jeweils mindestens zwei erste Aussparungen (7.1) und mindestens zwei zweite Aussparungen (7.2) in die Mehrschichtfolie (1) eingebracht sind.

3. Mehrschichtfolie (1) nach Anspruch 2, wobei die ersten Aussparungen (7.1) im Wesentlichen entlang des ersten Sammelleiters (9.1) und die zweiten Aussparungen (7.2) im Wesentlichen entlang des zweiten Sammelleiters (9.2) verlaufen.

4. Mehrschichtfolie (1) nach Anspruch 3, wobei die Aussparungen (7) entlang der gesamten Länge der Sammelleiter (9) angeordnet sind und wobei der Abstand zweier benachbarter erster Aussparungen (7.1) entlang des ersten Sammelleiters (9.1) und/oder der Abstand zweier benachbarter zweiter Aussparungen (7.2) entlang des zweiten Sammelleiters (9.2) zwischen 2 mm und 200 mm, bevorzugt zwischen 5 mm und 100 mm, besonders bevorzugt zwischen 10 mm und 20 mm liegt.

5. Mehrschichtfolie (1) nach einem der Ansprüche 1 bis 4, wobei die elektrisch leitfähige Füllmasse (8) eine Metallpaste enthaltend mindestens ein leitfähiges Metall oder eine leitfähige Metalllegierung umfasst und bevorzugt eine Silberpaste umfasst.

6. Mehrschichtfolie (1) nach einem der Ansprüche 1 bis 5, wobei die erste elektrisch leitfähige Schicht (3) und die zweite elektrisch leitfähige Schicht (4) zumindest ein Metall, eine Metalllegierung oder ein transparentes leitfähiges Oxid, bevorzugt ein transparentes leitfähiges Oxid, enthalten und eine Dicke von 10 nm bis 2 µm aufweisen.

7. Mehrschichtfolie (1) nach einem der Ansprüche 1 bis 6, wobei die erste Trägerfolie (5) und/oder die zweite Trägerfolie (6) zumindest ein nicht-thermoplastisches Polymer enthalten, bevorzugt Polyethylenterephthalat.

8. Mehrschichtfolie (1) nach einem der Ansprüche 1 bis 7, wobei die aktive Schicht (2) eine SPD-, ein PDLC-, eine elektrochrome oder eine elektrolumineszente Schicht ist.

9. Verbundscheibe (11) mindestens umfassend flächenmäßig miteinander laminiert:
- eine erste Scheibe (12),
- eine erste thermoplastische Folie (14),
- die Mehrschichtfolie (1) gemäß einem der Ansprüche 1 bis 8,
- eine zweite thermoplastische Folie (15),
- eine zweite Scheibe (13).

10. Verfahren zur Herstellung einer Mehrschichtfolie (1) mit elektrisch schaltbaren optischen Eigenschaften nach einem der Ansprüche 1 bis 8, wobei zumindest
a) eine Mehrschichtfolie (1) bereitgestellt wird,
b) mindestens eine erste Aussparung (7.1) in Form eines Durchgangslochs in der Mehrschichtfolie (1) erzeugt wird,
c) die mindestens eine erste Aussparung (7.1) mit einer elektrisch leitfähigen Füllmasse (8) verfüllt wird,
d) auf die äußere Oberfläche der ersten Trägerfolie (5) im Bereich der ersten Aussparung (7.1) ein erster Sammelleiter (9.1) aufgebracht wird,
wobei Schritt d) vor oder nach Schritt c) erfolgen kann und wobei zumindest die erste elektrisch leitfähige Schicht (3) über die elektrisch leitfähige Füllmasse (8) mit dem ersten Sammelleiter (9.1) elektrisch kontaktiert wird,
wobei vor, während oder nach Schritt b) mindestens eine zweite Aussparung (7.2) als Durchgangsloch in der Mehrschichtfolie (1) erzeugt wird,
die mindestens eine zweite Aussparung (7.2) mit einer elektrisch leitfähigen Füllmasse (8) verfüllt wird,
auf die äußere Oberfläche der zweiten Trägerfolie (6) im Bereich der elektrisch leitfähigen Füllmasse (8) ein zweiter Sammelleiter (9.2) aufgebracht und mit der elektrisch leitenden Füllmasse (8) elektrisch kontaktiert wird,
wobei zumindest die zweite elektrisch leitfähige Schicht (4) über die elektrisch leitfähige Füllmasse (8) mit dem zweiten Sammelleiter (9.2) kontaktiert wird.

11. Verwendung einer Mehrschichtfolie nach einem der Ansprüche 1 bis 8 in Kraftfahrzeugverglasungen, Gebäudeverglasungen im Innenbereich oder Außenbereich, bevorzugt in Kraftfahrzeugverglasungen, insbesondere in als Verbundscheiben ausgeführten Kraftfahrzeugverglasungen.

## Claims

1. Multilayer film (1) with electrically switchable optical properties, at least comprising, arranged in a planar manner in the following order:
- a first carrier film (5),
- a first electrically conductive layer (3),
- an active layer (2),
- a second electrically conductive layer (4), and
- a second carrier film (6),
wherein
- the multilayer film (1) has within its area at least one first cutout (7.1) and the at least one first cutout (7.1) protrudes in the form of a through-hole through all layers of the multilayer film (1),
- the first cutout (7.1) is filled with an electrically conductive filler compound (8), which electrically conductingly contacts the first electrically conductive layer (3) within the first cutout (7.1), and
- a first busbar (9.1) electrically conductingly contacts the electrically conducting filler compound (8),
wherein the multilayer film (1) has within its area at least one second cutout (7.2) in the form of a through-hole through all layers of the multilayer film (1), the second cutout (7.2) is filled with an electrically conductive filler compound (8), which electrically conductingly contacts the second electrically conductive layer (4) within the second cutout (7.2), and a second busbar (9.2) electrically conductingly contacts the electrically conducting filler compound (8),
wherein the electrically conducting connection between the busbars (9.1, 9.2) and the respective electrically conductive layers (3, 4) occurs exclusively via the filler compound (8), and wherein
- the cutouts (7) protrude through all layers of the multilayer film (1),
- at least one layer-free separating line (10) is introduced in the first electrically conductive layer (3), which line separates an electrically insulated edge region (16) comprising the at least one first cutout (7.1) or the at least one second cutout (7.2) from the primary surface of the first electrically conductive layer (3),
- at least one layer-free separating line (10) is introduced in the second electrically conductive layer (4), which separates an electrically insulated edge region (16) from the primary surface of the second electrically conductive layer (4), wherein the electrically insulated edge region (16) of the second electrically conductive layer (4) includes those of the cutouts (7) that do not extend within the electrically insulated edge region (16) of the first electrically conductive layer (3).

2. Multilayer film (1) according to claim 1, wherein in each case, at least two first cutouts (7.1) and at least two second cutouts (7.2) are introduced into the multilayer film (1).

3. Multilayer film (1) according to claim 2, wherein the first cutouts (7.1) run substantially along the first busbar (9.1) and the second cutouts (7.2) run substantially along the second busbar (9.2).

4. Multilayer film (1) according to claim 3, wherein the cutouts (7) are arranged along the entire length of the busbar (9) and wherein the distance between two adjacent first cutouts (7.1) along the first busbar (9.1) and/or the distance between two adjacent second cutouts (7.2) along the second busbar (9.2) is between 2 mm and 200 mm, preferably between 5 mm and 100 mm, particularly preferably between 10 mm and 20 mm.

5. Multilayer film (1) according to one of claims 1 through 4, wherein the electrically conductive filler compound (8) includes a metal paste containing at least a conductive metal or a conductive metal alloy and preferably includes a silver paste.

6. Multilayer film (1) according to one of claims 1 through 5, wherein the first electrically conductive layer (3) and the second electrically conductive layer (4) contain at least a metal, a metal alloy, or a transparent conductive oxide, preferably a transparent conductive oxide, and have a thickness of 10 nm to 2 µm.

7. Multilayer film (1) according to one of claims 1 through 6, wherein the first carrier film (5) and/or the second carrier film (6) contain at least a non-thermoplastic polymer, preferably polyethylene terephthalate.

8. Multilayer film (1) according to one of claims 1 through 7, wherein the active layer (2) is an SPD, a PDLC, an electrochromic, or an electroluminescent layer.

9. Composite pane (11) at least comprising, laminated in a planar manner to one another:
- a first pane (12),
- a first thermoplastic film (14),
- the multilayer film (1) according to one of claims 1 through 8,
- a second thermoplastic film (15),
- a second pane (13).

10. Method for producing a multilayer film (1) with electrically switchable optical properties according to one of claims 1 through 8, wherein at least
a) a multilayer film (1) is provided,
b) at least one first cutout (7.1) is produced in the form of a through-hole in the multilayer film (1),
c) the at least one first cutout (7.1) is filled with an electrically conductive filler compound (8),
d) a first busbar (9.1) is applied on the outer surface of the first carrier film (5) in the region of the first cutout (7.1),
wherein step d) can occur before or after step c) and wherein at least the first electrically conductive layer (3) is electrically contacted with the first busbar (9.1) via the electrically conductive filler compound (8),
wherein before, during, or after step b), at least one second cutout (7.2) is produced as a through-hole in the primary surface of the multilayer film (1),
the at least one second cutout (7.2) is filled with an electrically conductive filler compound (8), a second busbar (9.2) is applied on the outer surface of the second carrier film (6) in the region of the electrically conductive filler compound (8) and is electrically contacted with the electrically conducting filler compound (8),
wherein at least the second electrically conductive layer (4) is contacted with the second busbar (9.2) via the electrically conductive filler compound (8).

11. Use of a multilayer film according to one of claims 1 through 8 in motor vehicle glazings, building glazings in the interior or exterior, preferably in motor vehicle glazings, in particular in motor vehicle glazings implemented as composite panes.

## Revendications

1. Film multicouche (1) avec des propriétés optiques commutables électriquement, comprenant au moins, disposées de manière plane dans l'ordre suivant :
- un premier film support (5),
- une première couche électriquement conductrice (3),
- une couche active (2),
- une deuxième couche électriquement conductrice (4), et
- un deuxième film support (6),
dans lequel
- le film multicouche (1) comporte dans sa zone au moins une première découpe (7.1) et la au moins une première découpe (7.1) fait saillie sous la forme d'un trou traversant à travers toutes les couches du film multicouche (1),
- la première découpe (7.1) est remplie d'un composé de remplissage électriquement conducteur (8), qui est en contact électriquement conducteur avec la première couche électriquement conductrice (3) à l'intérieur de la première découpe (7.1), et
- une première barre omnibus (9.1) est en contact électriquement conducteur avec le composé de remplissage électriquement conducteur (8),
dans lequel le film multicouche (1) comporte dans sa zone au moins une deuxième découpe (7.2) sous la forme d'un trou traversant toutes les couches du film multicouche (1), la deuxième découpe (7.2) est remplie d'un composé de remplissage électriquement conducteur (8), qui est en contact électriquement conducteur avec la deuxième couche électriquement conductrice (4) à l'intérieur de la deuxième découpe (7.2), et une deuxième barre omnibus (9.2) est en contact électriquement conducteur avec le composé de remplissage électriquement conducteur (8),
dans lequel la connexion électriquement conductrice entre les barres omnibus (9.1, 9.2) et les couches électriquement conductrices respectives (3, 4) se produit exclusivement via le composé de remplissage (8), et dans lequel
- les découpes (7) font saillie à travers toutes les couches du film multicouche (1),
- au moins une ligne de séparation sans couche (10) est introduite dans la première couche électriquement conductrice (3), laquelle ligne sépare une région de bord électriquement isolée (16) comprenant la au moins une première découpe (7.1) ou la au moins une deuxième découpe (7.2) de la surface principale de la première couche électriquement conductrice (3),
- au moins une ligne de séparation (10) sans couche est introduite dans la deuxième couche électriquement conductrice (4), qui sépare une région de bord électriquement isolée (16) de la surface principale de la deuxième couche électriquement conductrice (4), la zone de bordure électriquement isolée (16) de la deuxième couche électriquement conductrice (4) comprenant les découpes (7) qui ne s'étendent pas à l'intérieur de la zone de bordure électriquement isolée (16) de la première couche électriquement conductrice (3).

2. Film multicouche (1) selon la revendication 1, dans lequel au moins deux premières découpes (7.1) et au moins deux deuxièmes découpes (7.2) sont respectivement pratiquées dans le film multicouche (1).

3. Film multicouche (1) selon la revendication 2, dans lequel les premières découpes (7.1) s'étendent sensiblement le long de la première barre omnibus (9.1) et les deuxièmes découpes (7.2) s'étendent sensiblement le long de la deuxième barre omnibus (9.2).

4. Film multicouche (1) selon la revendication 3, dans lequel les découpes (7) sont disposées sur toute la longueur de la barre omnibus (9) et dans lequel la distance entre deux premières découpes adjacentes (7.1) le long de la première barre omnibus (9.1) et/ou la distance entre deux deuxièmes découpes adjacentes (7.2) le long de la deuxième barre omnibus (9.2) est comprise entre 2 mm et 200 mm, de préférence entre 5 mm et 100 mm, de préférence entre 10 mm et 20 mm.

5. Film multicouche (1) selon l'une des revendications 1 à 4, dans lequel le composé de remplissage électriquement conducteur (8) comprend une pâte métallique contenant au moins un métal conducteur ou un alliage métallique conducteur et de préférence une pâte d'argent.

6. Film multicouche (1) selon l'une des revendications 1 à 5, dans lequel la première couche électriquement conductrice (3) et la deuxième couche électriquement conductrice (4) contiennent au moins un métal, un alliage métallique ou un oxyde conducteur transparent, de préférence un oxyde conducteur transparent, et ont une épaisseur de 10 nm à 2 µm.

7. Film multicouche (1) selon l'une des revendications 1 à 6, dans lequel le premier film support (5) et/ou le second film support (6) contiennent au moins un polymère non thermoplastique, de préférence du polyéthylène téréphtalate.

8. Film multicouche (1) selon l'une des revendications 1 à 7, dans lequel la couche active (2) est une couche SPD, une couche PDLC, une couche électrochrome ou une couche électroluminescente.

9. Vitre composite (11) comprenant au moins, stratifiés de manière plane les uns aux autres:
- une première vitre (12),
- un premier film thermoplastique (14),
- le film multicouche (1) selon l'une des revendications 1 à 8,
- un deuxième film thermoplastique (15),
- une deuxième vitre (13).

10. Procédé de fabrication d'un film multicouche (1) aux propriétés optiques commutables électriquement selon l'une des revendications 1 à 8, dans lequel au moins
a) un film multicouche (1) est fourni,
b) au moins une première découpe (7.1) est réalisée sous la forme d'un trou traversant dans le film multicouche (1),
c) la au moins une première découpe (7.1) est remplie d'un composé de remplissage électriquement conducteur (8),
d) une première barre omnibus (9.1) est appliquée sur la surface extérieure du premier film support (5) dans la région de la première découpe (7.1),
l'étape d) pouvant se produire avant ou après l'étape c) et au moins la première couche électriquement conductrice (3) étant mise en contact électrique avec la première barre omnibus (9.1) par l'intermédiaire du composé de remplissage électriquement conducteur (8), dans lequel, avant, pendant ou après l'étape b), au moins une deuxième découpe (7.2) est réalisée sous la forme d'un trou traversant dans la surface principale du film multicouche (1), la au moins une deuxième découpe (7.2) est remplie d'un composé de remplissage électriquement conducteur (8),
une deuxième barre omnibus (9.2) est appliquée sur la surface extérieure du deuxième film support (6) dans la région du composé de remplissage électriquement conducteur (8) et est en contact électrique avec le composé de remplissage électriquement conducteur (8),
dans lequel au moins la deuxième couche électriquement conductrice (4) est mise en contact avec la deuxième barre omnibus (9.2) par l'intermédiaire du composé de remplissage électriquement conducteur (8).

11. Utilisation d'un film multicouche selon l'une des revendications 1 à 8 dans les vitrages de véhicules automobiles, les vitrages de bâtiments à l'intérieur ou à l'extérieur, de préférence dans les vitrages de véhicules automobiles, en particulier dans les vitrages de véhicules automobiles réalisés sous forme de vitres composites.
